# EUROPEAN PATENT SPECIFICATION

(11) **EP 3 265 682 B1**
(45) Date of publication and mention of the grant of the patent: **25.09.2024**
(21) Application number: 16709317.8
(22) Date of filing: 04.03.2016
(51) Int. Cl.: F04D 17/10, F04D 29/42, F04D 29/70, B01D 19/00, F04D 29/62, F04D 25/06

(54) **CENTRIFUGAL MOTOR COMPRESSOR UNIT EQUIPPED WITH A LIQUID / GAS SEPARATOR**
RADIALMOTORVERDICHTERANLAGE MIT EINEM GAS-FLÜSSIGKEITS-SEPARATOR
UNITÉ MOTEUR-COMPRESSEUR CENTRIFUGE ÉQUIPÉE D'UN SÉPARATEUR LIQUIDE / GAZ

(30) Priority: 06.03.2015 FR 1551908
(43) Date of publication of application: 10.01.2018
(73) Proprietor: Thermodyn SAS, 71200 Le Creusot (FR)
(72) Inventor: ALBAN, Thomas, 71200 Le Creusot (FR); VIDALENC, Yoann, 71200 Le Creusot (FR); RENAUD, Julien, 71200 Le Creusot (FR); PELLEGRINI, Tiziano, 50127 Florence (IT); CONDOM, Sebastien, 92063 Courbevoie (FR)
(74) Representative: Novagraaf Group
(86) International application number: PCT/EP2016/054699
(87) International publication number: WO 2016/142306

(56) References cited:
- WO-A2-2007/103248
- WO-A2-2009/131462
- DE-A1- 10 010 077
- GB-A- 2 226 776

## Description

The invention generally concerns centrifugal motor compressors and concerns, within a non-limiting application, the motor compressor units operating at relatively low powers. They can be, for example, just as an illustration, powers from 400 kW to 700 kW and units meant to deliver in output, a gas compressed by a pressure, for example, from 25 to 30 bar and flows, for example, up to 10,000 m³/hour.

For this type of functioning, the compression lines of the gas use the compressors functioning at a relatively low flow and capable of providing relatively high pressure ratios.

We knew, in the state of the art, motor compressors of relatively low power use a high speed electric engine, that is, of a rotation frequency higher than the frequency of the electric supply, and at low voltage, lesser than 1 kV, coupled with a single section compressor constituted of one or two wheels in an awkward position. The engine and the compressor are attached in a single body under pressure. The tree line is typically supported by two radial magnetic bearings and an axial buttress. We knew in this respect, organisations using a motor compressor equipped with a centrifugal wheel acting as liquid / gas separator.

We could also refer to document WO2013/140184, which described a motor compressor integrated in the conduct of gas to be compressed. WO 2007/103248 A1 discloses a multiphase fluid processing device comprising a housing having an interior chamber, a separator, a compressor and a pump.

More particularly, the invention concerns a motor compressor unit meant to be boarded on an ocean platform or on a floating unit of production, storage and unloading, generally described by the term FPSO (for "Floating Production Storage and Offloading" As we conceived it, when a motor compressor unit is meant to be installed on a platform or on a floating unit, its volume and especially its control on the ground comprise a criterion which must be considered by the manufacturers of compression machines.

This problem is increasingly raised due to the presence, in upstream of the motor compressor unit, a liquid / gas separator, which is meant to maintain the gas admitted in the motor compressor as dry as possible, by preventing the intrusion of liquid phases in the compressor, which would be likely to pose problems of compressor damage, especially the wheels of the compressor, especially by erosion.

The aim of the invention is hence to overcome these disadvantages and, especially, propose a motor compressor unit having a reduced control on the ground, facilitating the maintenance operations and moreover allowing the reduction of pressure loss between the separator and the motor compressor.

The present invention is defined in the accompanying claims.

According to the invention, there is provided a centrifugal motor compressor unit as defined by claim 1 and comprising, among other features, a sump internally equipped with at least one gas separator stage for separating a gaseous phase and a liquid phase admitted within the sump.

The compressor stage, which is configured to receive at least one part of the separated gaseous phase is thus integrated to the separator, which allows optimising the volume of it all and notably to considerably reduce its control on the ground.

According to another characteristic of the liquid / gas separator, the compartment is closed by a blockage slab attached to the motor compressor and fixed to the sump. Fortunately, the compartment is an airtight compartment with respect to the exterior of the sump, an airtight seal being placed between the blockage slab and the sump. Fortunately, the sump internally includes means of guiding the gaseous phase in the compartment, at the place where an entry of the stage of the compressor has been assembled. In an execution mode, the separator includes cooling methods of a recirculated gas and / or a suppressed gas in upstream by a motor compressor or another gas handled by the motor compressor, said means of cooling being provided around the sump. The cooling system could be installed by suction or by suppression of the motor compressor unit.

In an execution mode, the separator is placed vertically. It can include a single compressor level.

Fortunately, a set of active magnetic bearings axially and radially support the tree line of the motor compressor.

In an execution mode, the compressor is a compressor with axial backflow and includes a bent exit apt to allow the extraction of the compressor.

Fortunately, the motor method and the compressor are then assembled in a common sump airtight against the gas handled by the motor compressor fixed in an airtight manner in the sump of the separator.

The compressor can still be a compressor with radial backflow and include a radial exit, all of it including the motor method and a wheel with a compression blade of the compressor constituting a set that could be disassembled.

The other aims, characteristics and advantages of the invention shall appear at the reading of the following description, given only as a non-limitative example, and in reference to the designs appended on which,
- Figure 1 is a perspective view of a motor compressor;
- Figure 2 is a diagrammatic view of an example of execution of a motor compressor with a radial backflow, integrated to a separator according to an example of execution of the invention;
- Figure 3 is a diagrammatic view of an example of execution of a motor compressor with an axial backflow, integrated to a separator according to an example of execution of the invention;
- Figure 4 is a detailed view of the motor compressor of figure 2;
- Figure 5 illustrates another execution mode of the motor compressor of figure 2;
- Figure 6 illustrates the bearings of the tree line of the motor compressors of figures 1 to 3;
- Figures 7 and 7A are general diagrams of a procedure of treatment of a gas by means of a motor compressor unit; and
- Figure 8 is an example of implementation of the procedure of figures 7 and 7A by means of a motor compressor unit compliant with the invention.

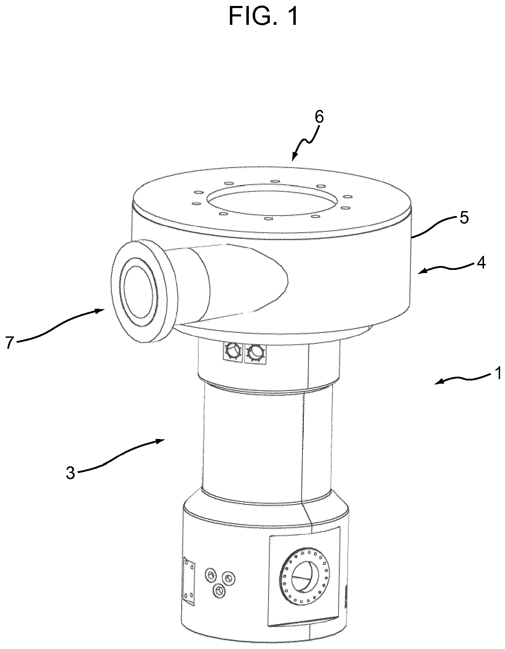

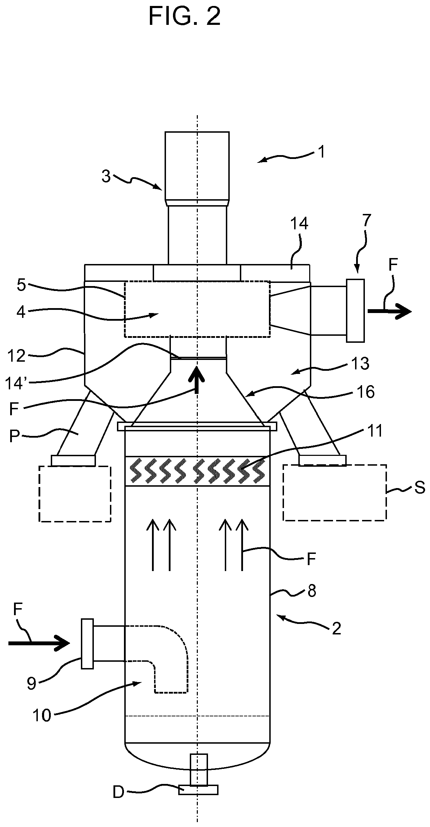

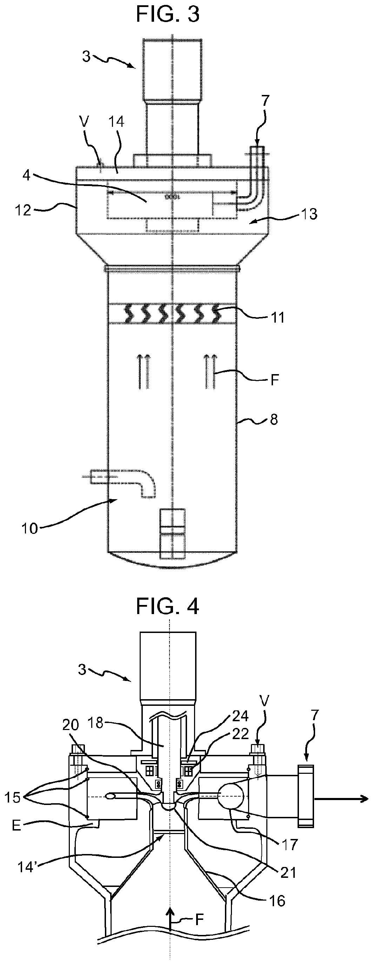

In figures 1 to 3, we have represented a motor compressor unit compliant with the invention, including a centrifugal motor compressor set 1 illustrated in figure 1 and a liquid / gas separator 2, or purifier, visible in figures 2 and 3.

The motor compressor unit is here meant to be mounted on an ocean platform or on a FPSO platform.

Like it would be described in detail later, with the aim of reducing the control of the ground of the motor compressor unit, the motor compressor is integrated to the separator. More particularly, the compression stage of the motor compressor is integrated to the separator.

The motor compressor 1 mainly includes a motor 3 constituted by a high speed electric engine, that is, the frequency of rotation higher than the frequency of the electric supply, leading to rotation of a tree line on which are rigidly mounted one or more wheels with blades, for example, by means of a Hirth joint.

In the illustrated application, the motor compressor 1 includes a single stage of compression 4 including a single wheel with blades mounted on the tree line.

As we have seen, the stage of compression 4 notably includes a sump 5 in which is placed the compression wheel with blades and which includes an axial or radial entry 6 for admission of gas in the motor compressor and an exit 7 by which the compressed gas is delivered in output by the motor compressor.

In the examples represented, entry 6 is axial.

In te execution mode of figure 2, the output of the motor compressor is radial, even though in the execution mode of figure 3, the output is axial, that is, parallel to the general axis of the motor compressor.

In the expected application, the gas admitted into the motor compressor unit is a humid gas, that is, a gas including a liquid phase constituted of liquid particles in suspension in the gas.

With the aim of preventing the introduction of ambient humidity in the compressor stage, the gas is first separated by the separator 2 before being delivered to the axial entry 6 of the compressor stage 4.

The liquid / gas separator 2 thus includes a sump 8, here in an overall cylindrical form, including an entry 9 by which the humid gas travels across the separation stages till sucked in by the motor compressor.

By considering the direction of dispersal of the gaseous flows (arrows F), the liquid / gas separator includes, according to the invention, a first separator stage 10 in which the liquid particles are separated by differentiation from the quantity of the movement then by gravity, then, for example, a second separator stage 11 including a set of obstacles distributed on the journey of the gaseous flow, provided in downstream of the first stage.

Alternatively, the second stage 11 can be cyclonic. Preferably, the second stage 11 can include several separation stages.

Alternatively, the liquid / gas separator of the first stage can be inertiel.

The separator stages provided in sump 8 constituted by the elements known to a worker in the trade. Hence, they shall not be described in detail below.

We shall however note that they are adapted for separating the liquid and the gaseous phases which are accepted in separator 2 so as to issue a dry gas at the compressor stage 4 in downstream of the second stage 11.

A drain D allows evacuating the liquid present in the depth of the separator.

We also see in figures 2 and 3 that in order to allow the integration of the motor compressor to the separator, sump 8 of the separator includes a head 12, overall cylindrical, with enlarged diameter, in which is dispersed the gaseous phase separated by the separator stages 10 and 11 and which internally delimits a case 13 in which is assembled the compressor stage 4. This head 12 is located at the opposite end to that of entry 9 of the separator.

The motor compressor is equipped with a blockage slab 14 which is fixed with the help of screws or pins V (visible in figure 3) on the head 12 so that the compressor stage 4 is positioned in the compartment 13 on the journey of the dry gas flow.

As represented in figures 2 and 3, we shall provide a diffuser 16 for channelling the gaseous flows to the compressor stage, executed, for example, in the form of a truncated cone surface converging towards entry 6 of engine compressor 1, as well as a perforated slab 14' allowing the correction of the flow from the separator to the double bend.

The motor compressor can be integrated to the separator according to the two geometric configurations, according to the radial or axial direction of the backflow. In the two backflow configurations, all of it constituted by the separator and the motor compressor can be positioned vertically or horizontally.

By referring to figure 2 and also to figure 4, which shows an execution detail of the motor compressor integrated to the separator, in a radial backflow configuration, the motor compressor preferably adopts a modular configuration and includes a volute 17 which opens in output 7 and which is assembled on a flange E provided internally in the median part of the head 12 and fixed to the latter with the interposition of the airtight seals 15.

Engine 3, with its tree line 18 on which is fixed a wheel with blades 20, constitutes a set that can be dismantled and which is assembled in a centred manner on the head 12 of the separator and on the volute 17.

We shall provide the configuration of the end of tree 18 in the form of ogive 21 for channelling the gaseous flows.

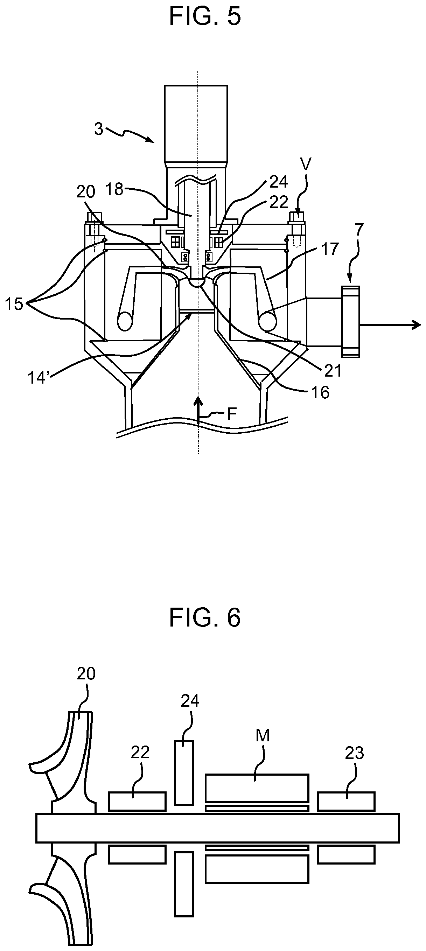

According to another implementation mode visible in figure 5, the volute 17 is extended according to a substantial part of the height of the head 12 and adopts a much easily executable asymmetrical shape.

Like in the execution mode described in reference to figure 4, the engine, the tree line and the centrifugal wheel constitute a set that can be dismantled and which is assembled in a centred manner on the head of the separator and on the volute.

The volute can also be dismantled.

As visible in figure 2, in the radial backflow configuration, the head 12 is equipped with bases P allowing the assembling of the motor engine unit on a support platform S.

On returning to figure 3, and as in all the configurations, the sump of the compressor and the motor are encapsulated in a common sump under pressure and seals the gas handled by the compressor.

The common sump also includes a blockage slab 14 which is fixed by screwing to the upper part of the separator head. As represented, exit 7 is curved in order to allow the assembling and disassembling of the motor and the compressor.

Due to the organisation just described, the compressor stage 4 is integrated to separator 2 and is placed in a sealed volume, whose pressure is that of the gas handled by the compressor, higher than the atmospheric pressure.

Thus, it is possible to execute sump 5 of the compressor stage, with a reduced metal thickness, thus limiting the manufacturing costs of the compressor stage.

We shall also note that the examples of execution described, the compressor and the electric engines are assembled in a common sealed sump. The motor is also pressurised between the suction and backflow pressures of the compressor.

Moreover, the use of a completely airtight common sump for the motor and for the compressor preventing any leak to the atmosphere allows completely removing the airtight lining traditionally used.

Moreover, we shall preferably adopt, for the motor compressor 1, a compact execution including a rotor and a tree line supported by active magnetic bearings.

Particularly, as visible in figure 6, on which we have represented the tree line 18 on which is fixed a centrifugal blade 20, we see that the tree of the motor compressor is radially supported by two bearings 22 and 23 positioned on either side of the active part of the motor M. moreover, a single buttress 24 without oil, typically magnetic, maintains the tree line 18 axially. This buttress 24 can be positioned between the radial bearings 22 and 23, as illustrated, or be positioned external to these bearings.

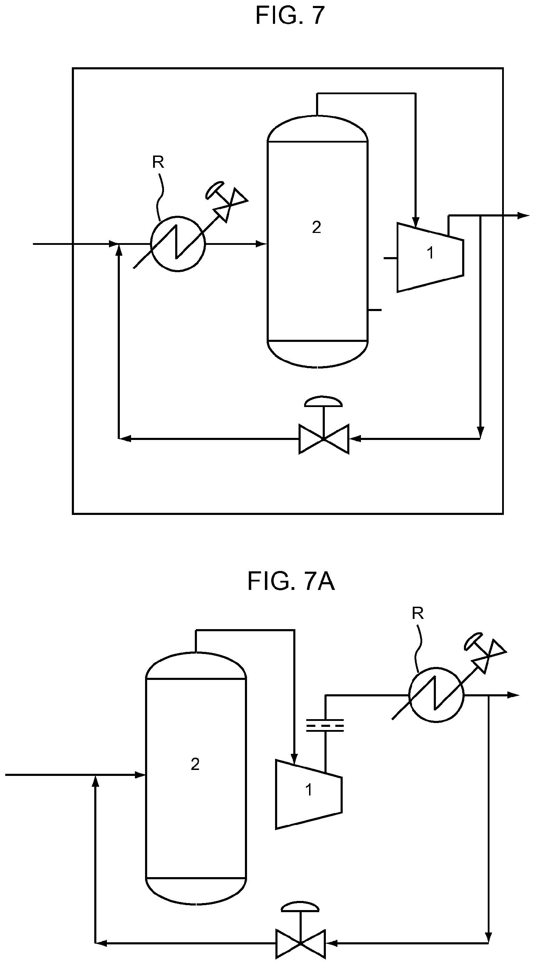

We shall now refer to figure 7 which diagrammatically illustrates an industrial procedure.

In this figure, we recognise compressor 1 supplied with dry gas by the separator 2 and from which the output is lopped back in entry, in order to prevent the pumping of the compressor produced by a reversal of the direction of the flow of liquid in the compressor. In this representation in figure 7, the cooling system is positioned in upstream of the motor compressor unit.

Figure 7A presents an alternative to the preceding solution, showing the positioning of the cooling system in downstream of the motor compressor unit.

A cooling unit is provided in upstream or downstream of the separator for cooling the hot gas issued from the motor compressor 1 (in case of pumping), from a motor compressor located in upstream or from another process point.

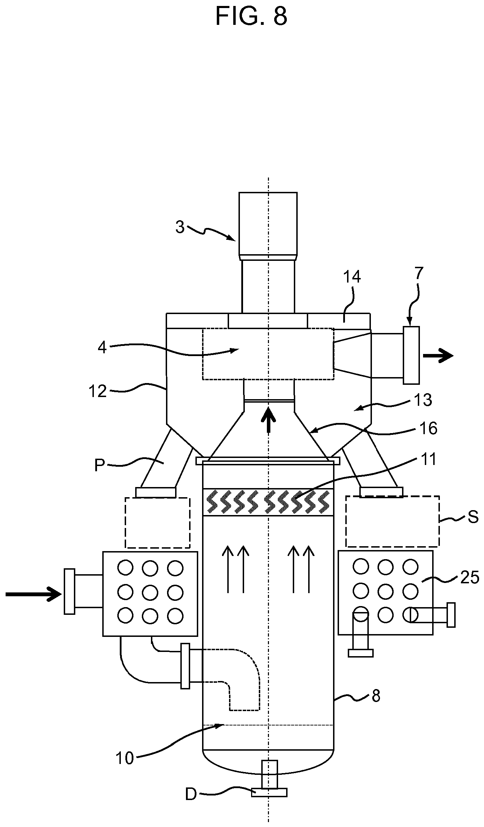

In reference to figure 8, the motor compressor unit is configured so as to involve the systems ensuring the implementation of the procedure illustrated in figures 7 and 7A. In this example of execution, which corresponds to a radial backflow configuration, and on which we recognised separator 2 to which is integrated the compressor 4 run by the electric motor 3, we see that the motor compressor unit also is involved in a cooling 25 meant to cool the recirculated gases from compressor 4, a compressor located in upstream or from another process point. An anti-pumping valve can also be used on the same frame as the motor compressor unit. We shall however note that the cooler 25 can also be interlocked in a double casing around separator 2.

We shall finally note that, in an advantageous implementation mode, the source of supply of low voltage of the electric motor and the magnetic bearings can also be subject to integration on the same frame, by considering the local security directives and applicable to the gas handled.

As we conceived, the invention that has been described, in which the compressor stage of the motor compressor is integrated in the separator, allows a notable reduction of the control on the ground of all that is constituted by the separator, motor compressor and its auxiliary devices.

The invention also allows a mass reduction of the motor compressor due to the immersion under pressure of the compressor in the separator.

The maintenance is also simplified due to the assembling and disassembling facilities by the modular aspect of the assembling.

We shall also note that by integrating the compressor stage in the separator, we obtain a reduction of the loss of pressure over the length of the piping lines existing in the technical status between the separator and the motor compressor.

Similarly, the control of the anti-pumping of the compressor is facilitated due to the reduction of the backflow volume and the line break of the gas.

## Claims

1. Centrifugal motor compressor unit, including a motor compressor (1) including a motor means (3) leading a compressor stage (4) in rotation, including a liquid / gas separator (2), said compressor being integrated in the separator (2), the liquid / gas separator (2) including a sump (8) having an overall cylindrical form equipped with at least one gas separator stage (10, 11) suitable for separating a humid gas accepted in entry in the sump into a gaseous phase and a liquid phase,
wherein the separator (2) includes a first separator stage (10) in which the humid gas is separated by at least one of differentiation from the quantity of the movement then by gravity and inertia applied to each of the gaseous phase and the liquid phase so as to issue a dry gas; and
wherein the sump (8) internally includes a compartment (13) including a diameter higher than that of the rest of the sump (8) in which flows the dry gaseous phase separated by said at least one separator stage (10, 11) and in which is assembled the compressor stage (4) of the motor compressor (1) configured for receiving at least one part of the separated gaseous phase, the motor compressor (1) being integrated into the separator (2) by the sump (8) of the separator including a head (12), overall cylindrical, with enlarged diameter, in which is dispersed in operation the gaseous phase separated by the at least one gas separator stage (10, 11) and which internally delimits the compartment (13) in which is assembled the compressor stage (4), the head (12) being located at the opposite end to that of an entry (9) of the separator (2).

2. Centrifugal motor compressor unit according to claim 1, in which the compartment (13) is blocked by a blockage slab (14) joint to the motor compressor (1) and fixed to the sump (8).

3. Centrifugal motor compressor unit according to claim 2, in which the compartment (13) is an airtight compartment vis-à-vis the exterior of the sump, an airtight seal (15) being placed between the blockage slab (14) and the sump (8).

4. Centrifugal motor compressor unit according to any one of the claims 1 to 3, in which the sump (8) internally includes a guidance means (16) of the gaseous phase in the compartment, at the place where an entry of the compressor stage has been assembled.

5. Centrifugal motor compressor unit according to any one of the claims 1 to 4, including a cooling means (17) of a recirculated gas and / or, of a backflow gas in upstream by a motor compressor which is different from the motor compressor (1) integrated with the separator (2) and which is located upstream of the separator, said means of cooling being provided around the sump (8).

6. Centrifugal motor compressor unit according to any one of the claims 1 to 5, in which the separator is positioned vertically.

7. Centrifugal motor compressor unit according to any one of the claims 1 to 6, including a single compressor stage.

8. Centrifugal motor compressor unit according to any one of the claims 1 to 7, including a second separator stage (11) chosen among a cyclonic or double bend separators.

9. Centrifugal motor compressor unit according to any one of claims 1 to 8, including a set of active magnetic bearings (22, 23) axially and radially supporting the tree line of the motor compressor.

10. Centrifugal motor compressor unit according to any one of claims 1 to 9, in which the compressor is an axial backflow compressor and includes a curved output suitable to allow the extraction of the compressor

11. Centrifugal motor compressor unit according to claim 10, in which the motor means (3) and the compressor (1) are assembled in a common sump airtight against the gas handled by the motor compressor fixed in an airtight manner in the sump (8) of the separator.

12. Centrifugal motor compressor unit according to any one of the claims 1 to 9, in which the compressor is a radial backflow compressor and includes a radial output, all of it including the motor means (3) and a wheel with compression blades of the compressor constituting a set that can be dismantled.

## Patentansprüche

1. Radialmotorverdichtereinheit, einschließlich eines Motorverdichters (1), einschließlich eines Motormittels (3), das eine Kompressorstufe (4) in Rotation versetzt, einschließlich eines Flüssigkeits-/Gasabscheiders (2), wobei der Verdichter in den Abscheider (2) integriert ist, wobei der Flüssigkeits-/Gasabscheider (2) einen Sumpf (8) einschließt, der eine allgemein zylindrische Form aufweist, der mit mindestens einer Gasabscheiderstufe (10, 11) ausgestattet ist, die zum Abscheiden eines feuchten Gases, dem ein Eintritt in den Sumpf gewährt wird, in eine Gasphase und eine Flüssigkeitsphase geeignet ist,
wobei der Abscheider (2) eine erste Abscheiderstufe (10) umfasst, in der das feuchte Gas durch mindestens eines von einer Differenzierung von der Menge der Bewegung und dann durch Schwerkraft und Trägheit abgeschieden wird, die jeweils auf die Gasphase und die Flüssigkeitsphase angewendet werden, um ein Trockengas auszugeben; und
wobei der Sumpf (8) intern ein Abteil (13) einschließt, einschließlich eines Durchmessers, der höher als der des Rests des Sumpfes (8) ist, in dem die trockene Gasphase strömt, die durch die mindestens eine Abscheiderstufe (10, 11) abgeschieden ist, und in dem die Verdichterstufe (4) des Motorverdichters (1) angeordnet ist, die konfiguriert ist, um mindestens einen Teil der abgeschiedenen Gasphase aufzunehmen, wobei der Motorverdichter (1) in den Abscheider (2) durch den Sumpf (8) des Abscheiders integriert ist, einschließlich eines Kopfes (12), allgemein zylindrisch, mit vergrößertem Durchmesser, in dem in einem Betrieb die durch die mindestens eine Gasabscheiderstufe (10, 11) abgeschiedene Gasphase verteilt ist und der das Abteil (13), in dem die Verdichterstufe (4) angeordnet ist, intern begrenzt, wobei sich der Kopf (12) an dem gegenüberliegenden Ende zu dem eines Eingangs (9) des Abscheiders (2) befindet.

2. Radialmotorverdichtereinheit nach Anspruch 1, in der das Abteil (13) durch eine mit dem Motorkompressor (1) verbundene und an dem Sumpf (8) befestigte Sperrplatte (14) versperrt ist.

3. Radialmotorverdichtereinheit nach Anspruch 2, in der das Abteil (13) ein luftdichtes Abteil entgegengesetzt der Außenseite des Sumpfes ist, wobei eine luftdichte Dichtung (15) zwischen der Sperrplatte (14) und dem Sumpf (8) platziert ist.

4. Radialmotorverdichtereinheit nach einem der Ansprüche 1 bis 3, in der der Sumpf (8) intern ein Führungsmittel (16) der Gasphase in dem Abteil an der Stelle aufweist, an der ein Eingang der Verdichterstufe angeordnet wurde.

5. Radialmotorverdichtereinheit nach einem der Ansprüche 1 bis 4, einschließlich eines Kühlmittels (17) eines rezirkulierten Gases und/oder eines stromaufwärts zurückströmenden Gases durch einen Motorverdichter, der sich von dem Motorverdichter (1) unterscheidet, der in den Abscheider (2) integriert ist und der sich stromaufwärts des Abscheiders befindet, wobei das Kühlmittel um den Sumpf (8) herum bereitgestellt ist.

6. Radialmotorverdichtereinheit nach einem der Ansprüche 1 bis 5, in der der Abscheider vertikal positioniert ist.

7. Radialmotorverdichtereinheit nach einem der Ansprüche 1 bis 6, einschließlich einer einzigen Verdichterstufe.

8. Radialmotorverdichtereinheit nach einem der Ansprüche 1 bis 7, einschließlich einer zweiten Abscheiderstufe (11), die aus einem zyklonischen oder einem Doppelkrümmerabscheider ausgewählt ist.

9. Radialmotorverdichtereinheit nach einem der Ansprüche 1 bis 8, einschließlich eines Satzes aktiver Magnetlager (22, 23), die die Baumgrenze des Motorverdichters axial und radial unterstützen.

10. Radialmotorverdichtereinheit nach einem der Ansprüche 1 bis 9, in der der Verdichter ein axialer Rückstromverdichter ist und einen gekrümmten Ausgang einschließt, der geeignet ist, um die Extraktion des Verdichters zu ermöglichen

11. Radialmotorverdichtereinheit nach Anspruch 10, in der das Motormittel (3) und der Verdichter (1) in einem gemeinsamen Sumpf luftdicht gegen das durch den Motorverdichter geförderte Gas angeordnet sind, der in einer luftdichten Weise in dem Sumpf (8) des Abscheiders befestigt ist.

12. Radialmotorverdichtereinheit nach einem der Ansprüche 1 bis 9, in der der Verdichter ein radialer Rückstromverdichter ist und einen radialen Ausgang aufweist, wobei das Ganze das Motormittel (3) und ein Rad mit Verdichterschaufeln des Verdichters einschließt, die einen Satz ausmachen, der zerlegt werden kann.

## Revendications

1. Groupe motocompresseur centrifuge, comportant un motocompresseur (1) comportant un moyen moteur (3) menant un étage de compresseur (4) en rotation, comportant un séparateur liquide/gaz (2), ledit compresseur étant intégré dans le séparateur (2), le séparateur liquide/gaz (2) comportant un carter (8) ayant une forme globalement cylindrique équipé d'au moins un étage de séparateur de gaz (10, 11) conçu pour séparer un gaz humide admis à l'entrée dans le carter en une phase gazeuse et une phase liquide,
dans lequel le séparateur (2) comporte un premier étage de séparateur (10) dans lequel le gaz humide est séparé par au moins l'une de la différenciation de la quantité de mouvement puis par la gravité et l'inertie appliquées à chacune de la phase gazeuse et de la phase liquide de manière à délivrer un gaz sec ; et
dans lequel le carter (8) comporte intérieurement un compartiment (13) comportant un diamètre supérieur à celui du reste du carter (8) dans lequel s'écoule la phase gazeuse sèche séparée par ledit au moins un étage de séparateur (10, 11) et dans lequel est assemblé l'étage de compresseur (4) du motocompresseur (1) conçu pour recevoir au moins une partie de la phase gazeuse séparée, le motocompresseur (1) étant intégré dans le séparateur (2) par le carter (8) du séparateur comportant une tête (12), globalement cylindrique, d'un diamètre élargi, dans laquelle est dispersé en fonctionnement la phase gazeuse séparée par l'au moins un étage de séparateur de gaz (10, 11) et qui délimite intérieurement le compartiment (13) dans lequel est assemblé l'étage de compresseur (4), la tête (12) étant située au niveau de l'extrémité opposée à celle d'une entrée (9) du séparateur (2).

2. Groupe motocompresseur centrifuge selon la revendication 1, dans lequel le compartiment (13) est bloqué par une plaque de blocage (14) reliée au motocompresseur (1) et fixée au carter (8).

3. Groupe motocompresseur centrifuge selon la revendication 2, dans lequel le compartiment (13) est un compartiment étanche à l'air vis-à-vis de l'extérieur du carter, un joint étanche à l'air (15) étant mis entre la plaque de blocage (14) et le carter (8).

4. Groupe motocompresseur centrifuge selon l'une quelconque des revendications 1 à 3, dans lequel le carter (8) comporte intérieurement un moyen de guidage (16) de la phase gazeuse dans le compartiment, au niveau de l'endroit où une entrée de l'étage de compresseur a été assemblée.

5. Groupe motocompresseur centrifuge selon l'une quelconque des revendications 1 à 4, comportant un moyen de refroidissement (17) d'un gaz recyclé et/ou d'un gaz d'écoulement de retour en amont par un motocompresseur qui est différent du motocompresseur (1) intégré au séparateur (2) et qui est situé en amont du séparateur, ledit moyen de refroidissement étant pourvu autour du carter (8).

6. Groupe motocompresseur centrifuge selon l'une quelconque des revendications 1 à 5, dans lequel le séparateur est positionné verticalement.

7. Groupe motocompresseur centrifuge selon l'une quelconque des revendications 1 à 6, comportant un seul étage de compresseur.

8. Groupe motocompresseur centrifuge selon l'une quelconque des revendications 1 à 7, comportant un second étage de séparateur (11) choisi parmi des séparateurs cyclonique ou à double courbure.

9. Groupe motocompresseur centrifuge selon l'une quelconque des revendications 1 à 8, comportant un ensemble de paliers magnétiques actifs (22, 23) supportant axialement et radialement la ligne d'arbre du motocompresseur.

10. Groupe motocompresseur centrifuge selon l'une quelconque des revendications 1 à 9, dans lequel le compresseur est un compresseur d'écoulement de retour axial et comporte une sortie courbée adaptée pour permettre l'extraction du compresseur.

11. Groupe motocompresseur centrifuge selon la revendication 10, dans lequel le moyen moteur (3) et le compresseur (1) sont assemblés dans un carter commun étanche au gaz traité par le motocompresseur fixé de manière étanche à l'air dans le carter (8) du séparateur.

12. Groupe motocompresseur centrifuge selon l'une quelconque des revendications 1 à 9, dans lequel le compresseur est un compresseur d'écoulement de retour radial et comporte une sortie radiale, tout cela comportant le moyen moteur (3) et une roue avec des pales de compression du compresseur constituant un ensemble qui peut être démonté.
